# EUROPÄISCHE PATENTSCHRIFT

(11) **EP 3 054 758 B1**
(45) Veröffentlichungstag und Bekanntmachung des Hinweises auf die Patenterteilung: **21.07.2021**
(21) Anmeldenummer: 14792602.6
(22) Anmeldetag: 29.09.2014
(51) Int. Cl.: A01G 9/02, A01C 1/04

(54) **SAATBAND, SAATBANDSYSTEM UND BEGRÜNUNGS- ODER BEPFLANZUNGSSYSTEM**
SEED TAPE, SEED TAPE SYSTEM AND GREENING OR PLANTING SYSTEM
RUBAN DE SEMIS, SYSTÈME DE RUBAN DE SEMIS ET SYSTÈME DE VÉGÉTALISATION OU DE PLANTATION

(30) Priorität: 10.10.2013 DE 202013104576 U
(43) Veröffentlichungstag der Anmeldung: 17.08.2016
(73) Patentinhaber: B+M Textil GmbH & Co. KG, 09465 Sehmatal-Cranzahl (DE); Weisel, Niklas, 09456 Annaberg-Buchholz (DE)
(72) Erfinder: WEISEL, Niklas, 09456 Annaberg-Buchholz (DE)
(74) Vertreter: Steiniger, Carmen
(86) Internationale Anmeldenummer: PCT/IB2014/064926
(87) Internationale Veröffentlichungsnummer: WO 2015/052615

(56) Entgegenhaltungen:
- WO-A1-02/43469
- DE-A1- 2 544 699
- DE-A1- 3 804 356
- DE-A1- 19 503 671
- DE-U1-202012 104 884
- JP-A- H1 075 608
- JP-A- H03 290 525
- US-A- 614 002
- US-A1- 2013 167 436

## Beschreibung

Die vorliegende Erfindung betrifft ein Saatband, das im Abstand voneinander in einen Hüllschlauch eingebettetes Saatgut aufweist. Die Erfindung betrifft außerdem ein Saatbandsystem. Ferner betrifft die vorliegende Erfindung ein Begrünungs- oder Bepflanzungssystem für ein zu begrünendes oder zu bepflanzendes Objekt.

Bei einem Einbringen von Saatgut in Erde oder ein Substrat ist ein der Pflanzensorte entsprechender Abstand der einzelnen Samenkörner zur Vermeidung von Krüppel- und Kleinwuchs besonders bei kleineren Samenkörnern angestrebt. Durch einen der Pflanzensorte optimal angepassten Abstand der Samenkörner wird das Saatgut in seiner Keimung nicht behindert, und ein späteres Verziehen der empfindlichen Jungpflanzen kann vermieden werden. Um die Samenkörner in ihrem Abstand zueinander fixieren zu können, werden in vielen Anwendungen Saatbänder verwendet, welche neben der festen Positionierung der Samenkörner das Saatgut mit Feuchtigkeit bzw. auch mit benötigten Nährstoffen versorgen.

Aus der Druckschrift DE 20 2006 013 567 U1 ist ein Saatband bekannt, welches aus einem zweilagigen Papierband besteht, wobei das Saatgut in einem konstanten Abstand zueinander zwischen den Papierlagen vorgesehen ist. Das verwendete Papier hat jedoch den Nachteil, dass die Reißfestigkeit des Saatbandes nicht sehr groß ist.

In der Druckschrift DE 661 767 A wird beschrieben, dass ein Trägermaterial eines Saatbandes, welches aus Papier oder einem dünnen Gewebe besteht, zusätzlich durch einen Textil- oder Papierfaden verstärkt wird, um die Reißfestigkeit des Trägermaterials zu erhöhen.

In einem weiteren Beispiel, welches in der Druckschrift DE 185 023 232 U offenbart ist, werden als Trägermaterial für ein Saatband bandförmige, wasserlösliche Folien aus Kunststoff verwendet, wobei die Samenkörner, eventuell ein Düngermittel und ein Faden zwischen den Folienstreifen vorgesehen ist. Die Folienteile werden durch eine Schweißnaht verschlossen. Der verwendete Kunststoff entspricht dabei nicht den heutigen umweltbewussten Ansprüchen.

Aus diesem Grund wird in der Druckschrift DE 195 04 168 A ein Saatband vorgeschlagen, bei welchem als Trägermaterial eine Naturfaser verwendet wird, wobei das Trägermaterial mehrlagig ausgebildet ist. Dabei können als Trägermaterial pflanzliche oder tierische Naturfasern oder auch eine Chemiefaser aus natürlichen Polymeren, wie Viskose oder Zellulose, zum Einsatz kommen. Die Faser muss in jedem Fall verrottbar sein. Dabei wurden Faserkombinationen aus Flachs, Baumwolle, Hanf, Jute oder Viskose angeführt.

In der Druckschrift DE 89 11 056 U1 ist eine Samenmatte aus mindestens zwei Vlieslagen, welche aus einer Naturfaser, insbesondere aus Jute, bestehen, offenbart. Zwischen den Vlieslagen ist eine Verstärkungsbahn angeordnet, auf welche das Saatgut aufgestreut ist. Die Vlieslagen und die eingeschlossene Verstärkungsbahn sind miteinander vernadelt, sodass das Saatgut auf seiner Einlegposition fixiert wird. Diese Samenmatten eignen sich aufgrund ihrer Festigkeit insbesondere für Grassamen bzw. zum Begrünen von Hanglagen. Dabei besteht die Möglichkeit, die Samenmatte örtlich zu befestigen, wodurch ein Abrutschen insbesondere im Anfangsstadium des Wachsens vermieden werden kann. Als nachteilig ist zu erwähnen, dass durch das Aufstreuen des Saatgutes auf die Verstärkungsbahn ein unregelmäßiger Saatabstand besteht.

Die Druckschrift DE 180 77 35 U beinhaltet ein Saatband der oben genannten Gattung, bei dem Saatkörner in vorgegebenem Abstand in ein Papierband mit winzigen Taschen oder einen Hüllschlauch eingebettet werden. Das Saatband besteht vorzugsweise aus einem sich leicht zersetzenden Material und kann in weiteren Taschen oder durch Tränkung mit Kunstdünger angereichert sein.

Begrünungssysteme werden beispielsweise zum Begrünen von Fassaden oder Dächern eingesetzt. Sie dienen nicht nur einer optisch attraktiven Außengestaltung von Objekten, sondern verbessern auch die Stadtluft und damit das allgemeine Wohlbefinden der Bürger.

In der Druckschrift DE 20 2009 014 675 U1 ist ein Begrünungssystem beschrieben, bei welchen Pflanzmatten an Fassaden befestigt werden. Dabei wird das Saatgut auf einem Substratträger aufgebracht, welcher auf einer Kunststoffplatte vorgesehen ist. Die Kunststoffmatte ist wiederum an der Fassade befestigt. Der Substratträger dient dabei dazu, die Wurzeln der Pflanzen und das Wasser zu halten.

Die Druckschrift DE 20 2012 104 884 U1 offenbart ein Vertikalbegrünungssystem, bei welchem an tragenden Wänden mittels Verankerungselementen eine Trägerplatte mit einem Abstand zur Wand befestigt ist. Dadurch wird eine Hinterlüftung realisiert und damit eine Mauerbefeuchtung vermieden. Auf der Trägerplatte ist ein flächiges Abdeckelement aus Vlies vorgesehen, welches so gefaltet wird, dass Pflanztaschen für die Aufnahme des Substrates entstehen. Das Substrat kann auf diese Weise Wurzeln im Vliesmaterial bilden. Das beschriebene Begrünungssystem, welches hauptsächlich für Moospflanzen verwendet wird, weist Wasserleitprofile auf, um die Pflanzen mit Wasser oder auch mit Düngemittel zu versorgen.

In der Druckschrift DE 10 2010 045 666 A1 ist ein Begrünungssystem, welches für vertikale und geneigte Flächen geeignet ist, enthalten. Hierbei ist die Vegetationsschicht an einer aufwändigen Unterkonstruktion bzw. an einer zwischengelegten Funktionsschicht befestigt und weist Auswuchslöcher auf, aus denen sich die entstehenden Pflanzen ungehindert entfalten können. Eine Flüssigkeitsversorgung kann über Bewässerungsmatten, die zwischen der Unterkonstruktion und der Vegetationsschicht angeordnet sind, erfolgen.

Ein weiteres Beispiel eines Begrünungssystems mit Bewässerungsvorrichtung ist aus der DE 38 04 356 A1 bekannt.

Die Druckschrift US 2013/0167436 A1 beinhaltet ein Saatband, welches wie herkömmliche flache Saatbänder in eine Furche in der Erde eingelegt werden soll. Das Saatband weist ein schlauchförmiges, längliches Gehäuse aus einem flexiblen Material, wie beispielsweise aus textilem Material, auf. In das Gehäuse sind in regelmäßigen Abständen Deposits, die aus in ein Substrat eingebrachtem Samen bestehen, eingebracht. Als Substrat kann beispielsweise Erde verwendet werden. Die Deposits werden durch einfaches Umstülpen des Gehäuses von außen nach innen in dieses eingebracht. Um die Deposits an ihren Positionen in dem Gehäuse zu halten, wird das schlauchförmige Gehäuse an jeweils zwischen zwei benachbarten Deposits befindlichen Stellen durch Zuschnüren oder Verdrillen verschlossen, woraufhin darüber hinaus die zwischen den Deposits befindlichen Stellen vernäht, verklebt oder anderweitig verfestigt werden.

Die Druckschrift JP H10 75608 A beschreibt ein weiteres Saatband mit ähnlichen Merkmalen wie US 2013/0167436 A1. In dieser Druckschrift wird die bestimmte Zusammensetzung des Substrats nicht diskutiert. Beispiele für ein Substrat, welches in einem solchen Saatband verwendet werden kann, sind in der WO 02/43469 A1 beschrieben.

In der Druckschrift DE 195 03 671 A1 ist eine Säfolie zum Säen von Pflanzensamen auf Böden angegeben. Die Säfolie besteht aus einem bahnförmigen Basisfolienmaterial und einem bahnförmigen Deckfolienmaterial, zwischen welchen in Reihen und in Abständen zueinander Saatmischungseinheiten, bestehend aus Pflanzensamen und Dünger, eingebracht sind. Zwischen den Saatmischungseinheiten sind die beiden Folien durch eine Vielzahl von bandförmigen, wasserlöslichen Klebstoffschichten miteinander verklebt. Dabei sind die Folien lediglich locker über die Saatmischungseinheiten geführt. Der Halt der Saatmischungseinheiten zwischen den Folien erfolgt entsprechend nur durch das Verkleben der beiden Folien miteinander. Die Basisfolienmaterial und das Deckfolienmaterial können zum Beispiel aus ungewebten Textilien ausgebildet sein, die in Wasser löslich oder in Wasser zersetzbar sind.

Es ist die Aufgabe der vorliegenden Erfindung, ein Saatband, ein Saatbandsystem sowie ein Begrünungs- oder Bepflanzungssystem bereit zu stellen, welche sich auf einfache Weise bereitstellen lassen, umweltverträglich sind und mit welchen unterschiedliche Objekte leicht, effizient und dauerhaft begrünt werden können.

Die Aufgabe wird durch ein Saatband mit den Merkmalen des Anspruchs 1 gelöst.

Erfindungsgemäß wird ein Saatband zur Verfügung gestellt, welches im Abstand voneinander in ein Schlauchtextil eingebettetes Saatgut aufweist. Unter Saatgut werden erfindungsgemäß einzelne als auch mehrere noch nicht gekeimte Samenkörner sowie schon gekeimtes Saatgut verstanden.

Das erfindungsgemäß verwendete Schlauchtextil besitzt eine hohe Elastizität, um das einzubettende Saatgut an der Einbettposition einerseits zu umschließen und andererseits mittels seiner zwischen den Saatgutpositionen bestehenden, ungedehnten Bereichen zu fixieren.

Zur Herstellung des Saatbandes kann das Saatgut direkt in das Innere des Schlauchtextils eingefüllt werden. Das Schlauchtextil ist dabei rundum geschlossen. Ein Fügen von Einzellagen, wie im Stand der Technik, ist damit erfindungsgemäß nicht notwendig.

Da bei dem erfindungsgemäßen Saatband das Schlauchtextil neben seiner hohen Elastizität eine hohe Stabilität und Dehnbarkeit aufweist, kann das Saatband in beliebigen Richtungen verlegt werden.

Zudem besitzt das erfindungsgemäß verwendete Schlauchtextil die Fähigkeit, Flüssigkeit gut aufzunehmen und zu speichern, wodurch das Saatgut ausreichend in seinem Keimprozess unterstützt werden kann und was sich vorteilhaft auf das spätere Wachstum auswirkt. Das Schlauchtextil ist dabei vorzugsweise so grobmaschig gestaltet, dass es den Wachstumsprozess des heranwachsenden Sprosses nicht behindert.

Bei der vorliegenden Erfindung wird das Saatgut entweder in dem Schlauchtextil in ein Substrat eingebettet oder das Saatgut ist auf andere Weise mit Substrat in Kontakt. Das Substrat ist nicht das Schlauchtextil selbst und auch kein Teil davon, kann aber aus dem gleichen Material ausgebildet sein. So ist das Substrat erfindungsgemäß aus wenigstens einem faserartigen und/oder geschäumten organischen oder mineralischen Material ausgebildet.

Mit dem Substrat kann beispielsweise eine optimale Wurzelbildung erreicht werden. Darüber hinaus kann mit dem Substrat eine Fixierung des Saatgutes ermöglicht werden. Das Substrat kann dabei zusätzlich zu dem Schlauchtextil Feuchtigkeit speichern und dadurch ideale Wachstumsbedingungen für den jeweiligen heranwachsenden Spross schaffen. In dem Substrat kann beispielsweise wenigstens ein Düngemittel eingelagert sein und/oder werden.

Das Substrat weist erfindungsgemäß wenigstens ein Garn, wenigstens einen Faden oder wenigstens ein Seil oder wenigstens eine Vliesmatte oder wenigstens ein Vliesband auf. Dabei sind das Garn, der Faden, das Seil, die Vliesmatte oder das Vliesband vorzugsweise textile Materialien, das heißt, mit textiltechnologischen Schritten hergestellte Materialien.

Das Substrat kann zumindest teilweise aus Steinwolle oder einem Schaumstoffmaterial ausgebildet sein.

Vorzugsweise ist das zur Ausbildung des Substrates verwendete Material überwiegend oder vollständig biologisch abbaubar. Hierbei kann/können als biologisch abbaubares Material beispielsweise Hanf und/oder Flachs und/oder Leinen und/oder Kokosfasern und/oder wenigstens ein Protein und/oder Cellulose eingesetzt werden.

Bei der vorliegenden Erfindung kann man das Saatgut an das wenigstens eine Garn, an den wenigstens einen Faden oder an das wenigstens eine Seil, die wenigstens eine Vliesmatte oder das wenigstens eine Vliesband kleben oder in das wenigstens eine Garn, den wenigstens eine Faden oder das wenigstens eine Seil oder das Vliesband eindrehen oder eindrillen. Das wenigstens eine Garn, der wenigstens eine Faden oder das wenigstens eine Seil, die wenigstens eine Vliesmatte oder das wenigstens eine Vliesband kann bzw. können hierbei sowohl zur Wasserführung als auch als Substrat zur Verwurzelung dienen.

In einer vorteilhaften Ausführungsform des erfindungsgemäßen Saatbandes ist das Schlauchtextil gestrickt oder geflochten oder aus wenigstens einem Band zu einem Schlauch verarbeitet, wodurch ein elastisches und stabiles Schlauchtextil entsteht. Zudem ist es hierdurch möglich, das erfindungsgemäße Saatband mit geringem Aufwand zu produzieren, wobei bekannte Strick- oder Flechtanlagen genutzt werden können. Ferner kann hierbei schon während des Herstellens des Schlauchtextils das Saatgut in das Schlauchtextil eingebracht werden.

Das wenigstens eine Garn, der wenigstens eine Faden oder das wenigstens eine Seil, die wenigstens eine Vliesmatte oder das wenigstens eine Vliesband kann in einer Variante der Erfindung vor der Ummantelung des Saatgutes durch den Hüllschlauch mit Saatgut bestückt werden. In einer anderen Variante der Erfindung wird das Saatgut unmittelbar bei einem Ummanteln, wie beispielsweise einem Umflechten oder Umstricken, des wenigstens einen Garn oder Seils, der wenigstens einen Vliesmatte oder des wenigstens einen Vliesbandes hinzugefügt. Somit kann das Saatgut an dem wenigstens einen Garn oder Seil, der wenigstens einen Vliesmatte oder dem wenigstens einen Vliesband fixiert sein, oder das Saatgut wird zwischen dem Hüllschlauch und dem wenigstens einen Garn, Faden oder Seil, der wenigstens einen Vliesmatte oder dem wenigstens einen Vliesband lose gehalten.

Die Aufgabe wird ferner durch ein Saatbandsystem gelöst, bei welchem wenigstens zwei der oben genannten, erfindungsgemäßen Saatbänder zu oder in einem Flächentextil verarbeitet oder miteinander verdrillt sind.

Dabei können die Saatbänder des Saatbandsystems beispielsweise verwebt oder in ein Flächentextil eingewebt sein. Es ist auch möglich, die Saatbänder zu Strängen zu verdrillen und damit stabile Saatseile herzustellen.

Die Aufgabe wird darüber hinaus durch ein Begrünungs- oder Bepflanzungssystem nach Anspruch 6 gelöst.

Das erfindungsgemäße Saatband, das die oben erwähnten Vorteile aufweist, kommt in dem erfindungsgemäßen Begrünungs- oder Bepflanzungssystem zum Einsatz. Dabei kann das erfindungsgemäße Begrünungs- oder Bepflanzungssystem auf und/oder an und/oder in einem Objekt, wie beispielsweise auf einem Dach oder an einer Fassade oder auch einem Boden, vorgesehen sein. Durch die hohe Elastizität und Stabilität des Schlauchtextils kann das erfindungsgemäße Begrünungs- oder Bepflanzungssystem ohne aufwändige Haltekonstruktionen in einem beliebigen Abstand zu dem zu begrünenden Objekt vorgesehen werden. Bei Verwendung des erfindungsgemäßen Begrünungs- oder Bepflanzungssystems an einer Fassade ist jedoch vorzugsweise ein Abstand zwischen dem Begrünungs- oder Bepflanzungssystem und der Fassade zur Hinterlüftung einzuhalten, um ein Eindringen von Feuchtigkeit in die Fassade zu verhindern.

Vorzugsweise ist das erfindungsgemäße Begrünungs- oder Bepflanzungssystem an einer Gebäudefassade und/oder einem Rankgerüst und/oder auf einem Dach und/oder auf oder in einem Boden und/oder auf oder in einer Terrasse und/oder auf oder in einem Deich vorgesehen, wobei diese Aufzählung nicht abschließend ist. Die Festigkeit des erfindungsgemäß verwendeten Schlauchtextils ermöglicht, wie bereits erwähnt, dass das Saatband oder das Saatbandsystem ohne aufwändige Unterkonstruktionen verlegt werden kann. Zudem können auch kleinwüchsige, blühende Pflanzen oder rankende Pflanzen an Fassaden von Gebäuden oder an Rankgerüsten, Fassaden oder Plätze auf neue Weise verschönern. Außerdem kann das erfindungsgemäße Begrünungs- oder Bepflanzungssystem zur Deichstabilisierung und gleichzeitigen Deichbegrünung eingesetzt werden.

Möglich ist auch, dass das erfindungsgemäße Begrünungs- oder Bepflanzungssystem zur Fixierung von Reissaat bzw. Reisanpflanzung genutzt wird. Hierfür kann erfindungsgemäße Saatbänder, in welchen das Saatgut eingebracht ist, oder wenigstens ein erfindungsgemäßes Saatbandsystem, wie beispielsweise ein aus erfindungsgemäßen Saatbändern gefertigtes Saatbandgewebe, in einem Boden, wie einer Bewässerungsterrasse, fixiert werden. Damit kann ein Ernteausfall, beispielsweise durch Überschwemmungen, welche immer häufiger auftreten, verhindert werden.

Bei der oben genannten Begrünungs- oder Bepflanzungssystem ist das Saatband oder das Saatbandsystem beliebig auf und/oder an und/oder in dem zu begrünenden bzw. zu bepflanzenden Objekt vorgesehen.

Dabei werden beispielsweise zur Änderung einer Verlegerichtung und/oder zur Fixierung des Saatbandes oder des Saatbandsystems Führungs- und/oder Befestigungselemente vorgesehen, wodurch sich das Saatband oder das Saatbandsystem in beliebigen Richtungen verlegen lässt und dem Saatband oder dem Saatbandsystem ein nötiger Halt an oder auf oder in dem Objekt verliehen wird.

Das Saatband oder das Saatbandsystem des erfindungsgemäßen Begrünungs- oder Bepflanzungssystems kann beispielsweise mäanderförmig an oder auf einer Oberfläche des Objektes oder in einer Tiefe des Objektes geführt sein, wodurch eine gleichmäßige Begrünung oder Bepflanzung des Objektes erreicht werden kann. Die zur Verfügung stehende Nutzfläche ist durch die mäanderförmige Anordnungsmöglichkeit des erfindungsgemäßen Begrünungs- oder Bepflanzungssystems zudem größer als bei herkömmlichen Begrünungs- oder Bepflanzungssystemen. Durch die vergrößerte Nutzfläche kann beispielsweise der Kohlendioxidgehalt der Luft, besonders in Stadtgebieten, reduziert werden.

Besonders vorteilhaft ist es, wenn das Saatband oder das Saatbandsystem des erfindungsgemäßen Begrünungs- oder Bepflanzungssystems mit wenigstens einer Bewässerungsvorrichtung gekoppelt ist. Mit Hilfe einer solchen Bewässerungsvorrichtung können die heranwachsenden Pflanzen ausreichend mit Wasser bzw. nährstoffangereicherter Flüssigkeit versorgt werden.

In einer besonders geeigneten Ausgestaltung der Erfindung ist die Bewässerungsvorrichtung im Inneren des Schlauchtextils vorgesehen. Vorzugsweise kommt hierbei eine rohrförmige oder schlauchartige Bewässerungsvorrichtung zum Einsatz, die von dem Schlauchtextil umschlossen ist.

Die Bewässerungsvorrichtung kann aus einzelnen, miteinander gekoppelten oder koppelbaren Teilstücken ausgebildet sein. Dabei können entsprechende Koppelelemente an den Enden der Teilstücke der Bewässerungsvorrichtung vorgesehen sein, durch welche optional auch einzelne Abschnitte des Schlauchtextils aneinander gefügt werden können.

In einer zweckdienlichen Ausgestaltung des erfindungsgemäßen Begrünungs- oder Bepflanzungssystems weist die Bewässerungsvorrichtung eine Ummantelung auf, die so stabil gestaltet ist, dass sie dem Druck der Bewässerungsflüssigkeit Stand halten kann.

Optional ist es vorgesehen, dass die Ummantelung aus einem wasserundurchlässigen Material besteht und die Ummantelung an Positionen, an denen Saatgut vorgesehen ist, Poren aufweist. Dabei ist der Durchmesser der Poren vorzugsweise so gestaltet, dass ein geeigneter Fluidaustritt durch die Poren erfolgen kann. Dadurch können die heranwachsenden Pflanzen optimal mit Flüssigkeit bzw. Nähstoffen versorgt werden, wobei der Fluidaustritt gezielt nur an den Saatgut- bzw. Pflanzenpositionen zur Verfügung gestellt werden kann. Dadurch kann eine optimale und dabei sparsame Versorgung des Saatgutes bzw. der Pflanzen realisiert werden.

Gemäß einer weiteren Option der vorliegenden Erfindung weist die Bewässerungsvorrichtung des Begrünungs- oder Bepflanzungssystems wenigstens ein Bewässerungsrohr oder eine Bewässerungsrinne auf, welche(s) in einem Rohr- oder Rinnenbodenbereich wenigstens eine Öffnung aufweist, an welcher wenigstens ein Saatband hängend befestigt ist, wobei das Bewässerungsrohr oder die Bewässerungsrinne mit einer Zuführung zum Einbringen eines Bewässerungsfluids, wie Wasser, in das Bewässerungsrohr oder die Bewässerungsrinne gekoppelt ist. Zum Bewässern des wenigstens einen Saatbandes wird hier das Bewässerungsrohr oder die Bewässerungsrinne mit Wasser geflutet, wonach das Wasser durch die wenigstens eine Öffnung in dem Bewässerungsrohr oder der Bewässerungsrinne läuft und an oder in dem Saatband entlangläuft, wodurch das Saatgut des Saatbandes mit Wasser versorgt wird.

Dabei kann an der wenigstens einen Öffnung wenigstens ein Haken und/oder Karabiner und/oder wenigstens ein regulierbares Ventil und/oder wenigstens eine regulierbare Düse vorgesehen sein. Durch das wenigstens eine Ventil oder die wenigstens eine Düse kann eine optimale Wasserversorgung des Saatgutes bei gleichzeitig sparsamem Wasserverbrauch realisiert werden. Ferner kann die Wasserversorgung an das jeweilige Saatgut und/oder an differenzierte Außen- und Wachstumsbedingungen, wie beispielsweise unterschiedliche Umgebungstemperaturen oder Wetterbedingungen, angepasst werden.

Besonders günstig ist es hierbei, wenn das Saatband über den Haken oder durch den Karabiner gelegt und/oder durch das Ventil oder die Düse geführt ist. Das Saatband kann an dem Haken oder dem Karabiner vorteilhaft aufgehängt werden. Wenn beispielsweise das erfindungsgemäße Saatband in Form einer Kordel ausgebildet ist, kann diese einfach zu deren Aufhängung über den Haken oder durch den Karabiner gelegt werden. Durch das Ventil oder die Düse strömendes Wasser kann bei dieser Ausführungsform der Erfindung direkt an bzw. in das Saatband geleitet werden. Dabei können Haken und/oder Karabiner als Befestigungselemente einzeln und/oder in Kombination mit Ventil und/oder Düse als Bewässerungselemente verwendet werden. Ebenso können Ventil und/oder Düse als Bewässerungselemente ebenfalls ohne gleichzeitige Verwendung von Befestigungselementen, wie Haken und/oder Karabiner, verwendet werden.

Das Saatband kann dabei in einer zweckmäßigen Ausgestaltung der Erfindung mit einem wenigstens Knoten oder einer Schlaufe, der bzw. die in oder an dem Saatband vorgesehen ist, an dem Bewässerungsrohr oder der Bewässerungsrinne fixiert sein. Solche Knoten oder Schlaufen sind auf einfache Weise wieder lösbar, sodass einzelne oder auch alle Saatbänder ohne Weiteres gegen neue ausgetauscht werden können und/oder das Bewässerungsrohr oder die Bewässerungsrinne nach Ablauf einer Wachstumsperiode wiederverwendet werden können.

Bevorzugte Ausführungsformen der vorliegenden Erfindung, deren Aufbau, Funktion und Vorteile werden im Folgenden anhand von Figuren näher erläutert, wobei
- Figur 1: schematisch eine mögliche Anordnung eines erfindungsgemäßen Saatbandes in einer Seitenansicht zeigt;
- Figur 2: schematisch eine mögliche Ausgestaltung eines erfindungsgemäßen Begrünungs- oder Bepflanzungssystems in einer Seitenansicht zeigt;
- Figur 3: schematisch ein weiteres Anwendungsbeispiel eines erfindungsgemäßen Begrünungs- oder Bepflanzungssystems in einer Seitenansicht zeigt;
- Figur 4: schematisch eine mögliche Variante eines erfindungsgemäßen Saatbandes mit einer innengeführten Bewässerungsvorrichtung in einer perspektivischen Seitenansicht auf einen Teil des Saatbandes zeigt;
- Figur 5: schematisch eine weitere Ausführungsform eines erfindungsgemäßen Begrünungs- oder Bepflanzungssystems in einer perspektivischen Ansicht zeigt; und
- Figur 6: schematisch noch eine weitere Variante eines erfindungsgemäßen Begrünungs- oder Bepflanzungssystems in einer Seitenansicht zeigt

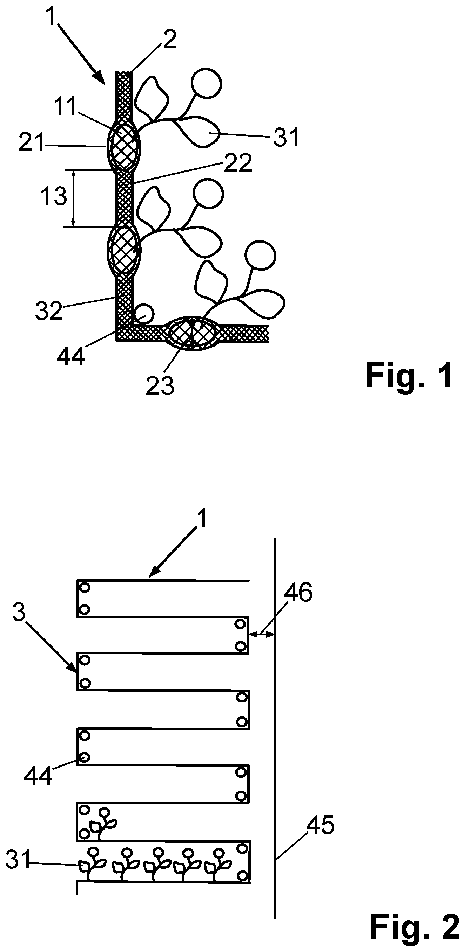

In Figur 1 zeigt eine mögliche Anordnung eines erfindungsgemäßen Saatbandes 1 in einer Seitenansicht. Dabei kann das Saatband 1, wie dargestellt, beispielsweise winkel- oder auch kreisförmig, zickzackförmig, linear, mäanderförmig oder wirr verlegt werden.

Das Saatband 1 weist ein Schlauchtextil 2 auf, in welchem jeweils in einem Abstand 13 Saatgut 11 eingebettet ist. Dabei können im Abstand voneinander jeweils einzelne Saatkörner 12 oder eine Mehrzahl von Saatkörnern 12, in gekeimter und/oder in nicht gekeimter Form, in das Schlauchtextil 2 eingebettet sein. Der jeweilige Abstand 13 zwischen den einzelnen Saatkörnern 12 ist vorzugsweise, aber nicht zwingend konstant und wird typischerweise bei der Herstellung des Saatbandes 1 bestimmt.

Das Schlauchtextil 2 kann beispielsweise gestrickt, gehäkelt, gewirkt oder gewebt sein. Es weist hierdurch eine hohe Elastizität auf. An den Positionen 22, an denen ein oder mehrere Saatkörner 12 eingebettet sind, wird das Schlauchtextil 2 bis auf eine Breite 23 gedehnt. Die Saatkörner 12 können noch nicht gekeimt sein oder auch schon Pflanzenkeime aufweisen. An den Abschnitten 21, an denen sich kein Saatkorn 12 befindet, bleibt das Schlauchtextil 2 ungedehnt und bildet damit an diesen Stellen eine Zwischenbarriere für das Saatgut 1 aus.

Sollen nur einzelne Saatkörner 12 voneinander beabstandet in dem Schlauchtextil 2 vorgesehen werden, ist eine maximale Breite 23 des gedehnten Schlauchtextils 2 an die Querausdehnung des Saatkornes 12 eingepasst, wodurch das Saatkorn 12 ohne weitere Zwischenelemente an der Einbettposition fixiert werden kann. Die ungedehnten Abschnitte 22 des Schlauchtextils 2 fixieren dabei die Position des Saatkorns 12.

In dem in Figur 1 gezeigten Ausführungsbeispiel besteht das Schlauchtextil 2 aus einem grobmaschigen Material, sodass die heranwachsen Pflanzen 31 nicht in ihrem Wachstum behindert werden. Dabei ist es beispielsweise möglich, das Saatgut 11 in dem Schlauchtextil 2 zusätzlich in Pflanzerde 32 oder ein anderes geeignetes Substrat einzubetten. Dabei dient die Pflanzerde 32 oder das Substrat, wie auch das Schlauchtextil 2, der Speicherung von Wasser oder auch von Düngemittel. Zudem stabilisiert die Pflanzerde 32 bzw. das Substrat das eingebettete Saatgut 11 und unterstützt die Wurzelbildung der heranwachsenden Pflanzen 31.

Figur 1 demonstriert beispielhaft eine Winkelführung eines erfindungsgemäßen Saatbandes 1. Aufgrund der Stabilität des Saatbandes 1 ist es ausreichend, wenn bei einer Richtungsänderung des Saatbandes 1 das Saatband 1 um ein beispielsweise an einem hier nicht gezeigten Objekt befestigtes Führungs- und/oder Befestigungselement 44 geführt wird. Dabei kann das Führungs- und/oder Befestigungselement 44 zum Beispiel ein Nagel, eine Schraube, eine Stange oder ähnliches sein. Zudem ist es aufgrund der Stabilität des Saatbandes 1 möglich, das Saatband 1 straff um das Führungs- und/oder Befestigungselement 44 zu legen. Dadurch kann das Saatband 1 ohne weitere Befestigung an der gewünschten Position des Führungs- und/oder Befestigungselementes 44 fixiert werden. Ein Verrutschen des Saatbandes 1 an dem Führungs- und/oder Befestigungselement 44 wird vermieden.

Figur 2 zeigt eine mögliche Ausgestaltung eines erfindungsgemäßen Begrünungs- oder Bepflanzungssystems 3 in einer Seitenansicht. Dabei bezeichnen gleiche Bezugszeichen wie in Figur 1 gleiche Komponenten, weshalb an dieser Stelle auf die vorhergehende Beschreibung dieser Komponenten verwiesen wird.

Das Saatband 1 ist in dem gezeigten Ausführungsbeispiel mäanderförmig um Führungs- und/oder Befestigungselemente 44 mit einer ausreichenden Spannung vor einer Gebäudefassade 41 geführt. Das Saatband 1 kann dabei in beliebigen Richtungen verlegt werden. Vorteilhaft ist es, wenn zwischen der Gebäudefassade 41 und dem nächstliegenden Punkt des Begrünungs- oder Bepflanzungssystems 3 ein Abstand 46 vorgesehen ist. Der Abstand 46 dient der Hinterlüftung der Gebäudefassade 41 und verhindert, dass Feuchtigkeit vom Begrünungs- oder Bepflanzungssystem 3 in das Mauerwerk der Gebäudefassade 41 eindringen kann.

Durch die mäanderförmige Führung des Saatbandes 1 entsteht eine im Gegensatz zu eingangs erwähnten Begrünungs- oder Bepflanzungssystemen vergrößerte Begrünungsfläche, wodurch ein optimaler Lärmschutz realisiert werden kann. Zudem erhöht sich durch die vergrößerte Dichte der Pflanzen 31 die Kohlendioxid-Reduktion der Luft, was eine Anwendung des erfindungsgemäßen Begrünungs- oder Bepflanzungssystems 3 insbesondere für Ballungszentren befürwortet. Außerdem kann das erfindungsgemäße Begrünungs- oder Bepflanzungssystem 3 einer Verbesserung der Optik von tristen Gebäudefassaden in Städten dienen. Ansprechend ist auch eine Ausgestaltung des Begrünungs- oder Bepflanzungssystems 3, bei welcher das Saatband 1 nicht vertikal, sondern in einem beliebigen Winkel um beispielsweise stangenförmige Führungs- und/oder Befestigungselemente 44 geführt ist oder mehrere Saatbänder 1 zu einem Flächenmuster gestaltet werden.

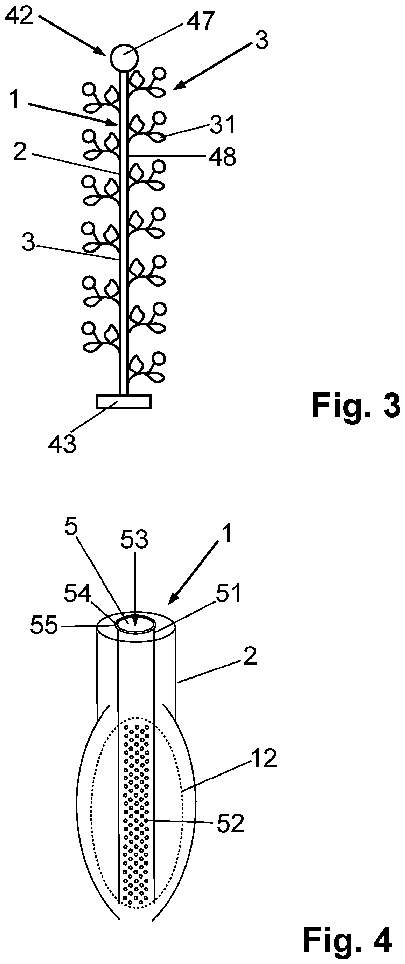

Figur 3 zeigt schematisch ein weiteres Anwendungsbeispiel eines erfindungsgemäßen Begrünungs- oder Bepflanzungssystems 3 in einer Seitenansicht. Dabei bezeichnen gleiche Bezugszeichen wie in den Figuren 1 und 2 gleiche Komponenten. Auf die obigen Ausführungen zu diesen Komponenten wird hiermit verwiesen.

Das Saatband 1 des Begrünungs- oder Bepflanzungssystems 3 von Figur 3 ist hier an einem Stangensystem 42 befestigt, welches auf einem Sockel 43 steht, um dem Stangensystem 42 die erforderliche Standfestigkeit auch bei einer vollständigen Begrünung zu geben. Das Stangensystem 42 kann durch ein optisch ansprechendes Abschlusselement, welches beispielsweise eine Kugel sein kann, versehen sein.

Beispielsweise kann das Saatband 1 spiralförmig um die Stange 48 des Stangensystems 42 gelegt sein, wobei durch die Stabilität des Saatbandes 1 eine gestraffte Führung des Saatbandes 1 möglich ist. Zusätzliche Befestigungselemente sind in diesem Anwendungsbeispiel nicht erforderlich. Durch die spiralförmige Führung des Saatbandes 1 um die Stange 48 des Stangensystems 42 und den Abstand 13 der Saatkörner 12, wie er in Figur 1 dargestellt ist, können die Pflanzen 31 des Begrünungs- oder Bepflanzungssystems 3 wechselseitig an der Stange 48 angeordnet sein. Dadurch ergibt sich ein ansprechendes Bild einer Begrünung. Das Stangensystem 42 kann aufgrund dessen, dass es nicht im Boden verankert werden muss, an beliebigen Orten aufgestellt oder auch beliebig an einen anderen Ort versetzt werden.

Figur 4 stellt schematisch eine mögliche Variante eines erfindungsgemäßen Saatbandes 1 mit einer innengeführten Bewässerungsvorrichtung 3 in einer Seitenansicht dar. Dabei bezeichnen bereits verwendete Bezugszeichen gleiche Komponenten, auf deren vorhergehende Beschreibung hiermit Bezug genommen wird.

Bei der in Figur 4 dargestellten Ausführungsform des erfindungsgemäßen Saatbandes 1 und einem hiermit herstellbaren Begrünungs- oder Bepflanzungssystem 3 ist in einem Innenraum des Schlauchtextils 2 eine röhrenförmige oder schlauchartige Bewässerungsvorrichtung 5 vorgesehen. Die Bewässerungsvorrichtung 5 weist in dem gezeigten Beispiel eine Ummantelung 51 auf, welche ein wasserundurchlässiger Kunststoff sein kann. An den Positionen, an denen ein oder mehrere Saatkörner 12 in das Schlauchtextil 2 eingebettet sind, besitzt die Ummantelung 51 Poren 52, aus denen die Bewässerungsflüssigkeit 53 austreten kann. Die Poren 52 der Ummantelung 51 sind so gestaltet, dass eine dosierte Flüssigkeitsabgabe an das oder die Saatkörner 12 bzw. an eine nicht dargestellte, aus einem Saatkorn 12 entstehende Pflanze 31 erfolgen kann. Zudem wird ein überhöhter Flüssigkeitsaustritt aus der Ummantelung 51 der Bewässerungsvorrichtung 5 an Positionen, an denen keine Flüssigkeit benötigt wird, vermieden.

In der Ausbildung von Figur 4 wurde die Bewässerungsvorrichtung 5 in das Innere des Schlauchtextils 2 bereits bei der Herstellung des Saatbandes 1 eingefügt. Dadurch kann das Saatband 1 bzw. das damit ausgebildete Begrünungs- oder Bepflanzungssystem 3 besonders effektiv hergestellt werden. Zudem ist bei dem gezeigten Beispiel jeweils an Enden 55 von Teilstücken der Bewässerungsvorrichtung 5 jeweils ein Koppelelement 54 vorgesehen, wodurch sich die Teilstücke oder auch zwei nebeneinander angeordnete Saatbänder 1 miteinander verbinden lassen.

Das Koppelelement 54 kann dabei genutzt werden, um die Bewässerungsvorrichtungen 5 von zwei Saatbändern 1 so zu verbinden, dass gleichzeitig die Schlauchtextile 2 der einzelnen Saatbänder 1 lückenlos aneinander gefügt werden. Vorteilhaft ist es, wenn das Koppelelement 54 die Bewässerungsvorrichtungen 5 der einzelnen Saatbänder 1 so aneinander fügt, dass keine Flüssigkeit an der Koppelstelle austritt, um ein unnötiges Vergeuden von Flüssigkeit zu vermeiden.

Durch die Möglichkeit, die Pflanzen 31 des Begrünungs- oder Bepflanzungssystems 3 ausreichend und gezielt aus dem Inneren des Saatbandes 1 mit Nahrung und Wasser versorgen zu können, entsteht ein neuartiges Begrünungs- oder Bepflanzungssystem 3, welches sich ohne aufwändige zusätzliche Befestigungen und in dem Begrünungs- oder Bepflanzungssystem 3 integrierbaren Wasserleitungen optisch gut beispielsweise ein Stadtbild einfügen lässt.

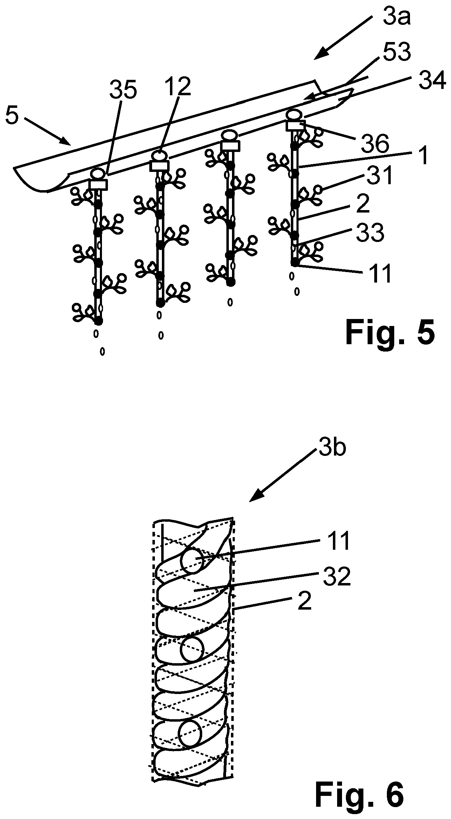

Figur 5 zeigt schematisch eine weitere Ausführungsform eines erfindungsgemäßen Begrünungs- oder Bepflanzungssystems 3a. Das Begrünungs- oder Bepflanzungssystem 3a weist eine Bewässerungsrinne 34 auf, in deren Bodenbereich Öffnungen 35 vorgesehen sind. In anderen, nicht gezeigten Ausführungsformen der Erfindung kann anstelle der Bewässerungsrinne 34 auch ein Bewässerungsrohr verwendet werden. Die Bewässerungsrinne 34 oder das Bewässerungsrohr ist mit einer nicht gezeigt Wasserzuführung gekoppelt, sodass die Bewässerungsrinne 34 oder das Bewässerungsrohr, wie es durch den Pfeil schematisch angedeutet ist, mit Wasser 33 geflutet werden kann.

In den Öffnungen 35 ist jeweils wenigstens ein Saatband 1 hängend befestigt. Die Befestigung des jeweiligen Saatbandes an oder in der Öffnung 35 kann beispielsweise über wenigstens einen, in oder an einem Endbereich des Saatbandes 1 vorgesehenen bzw. eingebrachten Knoten 12 bzw. eine entsprechende Schlaufe erfolgen. Ferner ist in dem gezeigten Ausführungsbeispiels an jeder der Öffnungen 35 ein regulierbares Ventil 36 vorgesehen. Das Ventil 36 kann beispielsweise als Schraubventil ausgestaltet sein. Anstelle des Ventils 36 kann beispielsweise auch eine regulierbare Düse verwendet werden.

Das in die Bewässerungsrinne 34 bzw. das Bewässerungsrohr eingebrachte Wasser 33 dringt durch die Öffnungen 35 und rinnt danach an den Saatbändern 1 hinab, wobei das Saatgut 11 der Saatbänder 1 bewässert wird. Überflüssiges Wasser 33 tropft nach unten hin ab.

Figur 6 zeigt schematisch noch eine weitere Variante eines erfindungsgemäßen Begrünungs- oder Bepflanzungssystems 3b. Das Begrünungs- oder Bepflanzungssystem 3b nutzt zur Einbringung des Saatgutes 11 ein Substrat 32. Das Substrat 32 ist in dem in Figur 6 gezeigten Ausführungsbeispiel ein Substratseil, welches aus einem natürlichen bzw. biologisch abbaubaren Material, wie beispielsweise aus Hanf, Flachs, Leinen, Kokosfasern, Protein, Seide und/oder Cellulose ausgebildet ist. Das Substratseil ist um einzelne Samenkörner des Saatgutes 11 gewunden. Das Substrat 32 bildet hierbei eine gute Grundlage zur Wurzelausbildung an dem Saatgut 11 und bietet darüber hinaus die Möglichkeit einer guten Wasserführung zudem Saatgut 11 und zumindest zeitweisen Wasserspeicherung in dem Substrat 32.

In anderen, nicht gezeigten Ausführungsformen der vorliegenden Erfindung können anstelle des Substratseils auch andere Substrate 32, wie beispielsweise lockere und dicke, vorzugsweise biologisch abbaubare Vliesmatten oder Vliesbänder, verwendet werden.

## Patentansprüche

1. Saatband (1), das im Abstand (13) voneinander in einem Hüllschlauch eingebettetes Saatgut (11) aufweist,
wobei der Hüllschlauch ein Schlauchtextil (2) ist, das das Saatgut (11) vor und/oder beim Keimen des Saatgutes (11) gedehnt umschließt und zwischen den Saatgutpositionen ungedehnt ist, wobei das in dem Schlauchtextil (2) eingebettete Saatgut (11) in wenigstens ein Substrat (32) eingebettet ist und/oder mit wenigstens einem Substrat (32) in Kontakt ist, und wobei das Substrat (32) wenigstens aus einem faserartigen und/oder geschäumten organischen oder mineralischen Material ausgebildet ist, **dadurch gekennzeichnet, dass**
das Substrat (32) wenigstens ein Garn, wenigstens einen Faden oder wenigstens ein Seil oder wenigstens eine Vliesmatte oder wenigstens ein Vliesband aufweist, und wobei das Saatgut (11) an dem wenigstens einen Garn, Faden oder Seil, der wenigstens einen Vliesmatte oder dem wenigstens einen Vliesband fixiert ist, oder das Saatgut (11) zwischen dem Hüllschlauch und dem wenigstens einen Garn, Faden oder Seil, der wenigstens einen Vliesmatte oder dem wenigstens einen Vliesband lose gehalten wird.

2. Saatband nach Anspruch 1, **dadurch gekennzeichnet, dass** das Schlauchtextil (2) gestrickt und/oder geflochten und/oder zu wenigstens einem Strang verdrillt und/oder aus wenigstens einem Band zu einem Schlauch verarbeitet ist.

3. Saatband nach wenigstens einem der vorhergehenden Ansprüche, **dadurch gekennzeichnet, dass** das Substrat (32) und/oder das Schlauchtextil (2) vorwiegend oder vollständig aus wenigstens einem biologisch abbaubaren Material ausgebildet ist, wobei das biologisch abbaubare Material Hanf und/oder Flachs und/oder Leinen und/oder Kokosfasern und/oder Seide und/oder wenigstens ein Protein und/oder Cellulose aufweist.

4. Saatbandsystem, **dadurch gekennzeichnet, dass** wenigstens zwei Saatbänder (1) nach wenigstens einem der vorhergehenden Ansprüche zu oder in einem Flächentextil verarbeitet oder miteinander verdrillt sind.

5. Saatbandsystem nach Anspruch 4, **dadurch gekennzeichnet, dass** die wenigstens zwei Saatbänder (1) verwebt sind oder in das Flächentextil eingewebt sind.

6. Begrünungs- oder Bepflanzungssystem (3, 3a, 3b) für ein zu begrünendes oder zu bepflanzendes Objekt (4),
**dadurch gekennzeichnet,**
**dass** das Begrünungs- oder Bepflanzungssystem (3, 3a, 3b) wenigstens ein Saatband (1) nach einem der Ansprüche 1 bis 3 und/oder ein Saatbandsystem nach einem der Ansprüche 4 oder 5 aufweist, das auf und/oder an und/oder in dem Objekt (4) vorgesehen ist.

7. Begrünungs- oder Bepflanzungssystem nach Anspruch 6, **dadurch gekennzeichnet, dass** das Saatband (1) und/oder das Saatbandsystem mit voneinander beabstandeten Führungs- und/oder Befestigungselementen (44) an oder auf dem Objekt (4) vorgesehen ist.

8. Begrünungs- oder Bepflanzungssystem nach wenigstens einem der Ansprüche 6 oder 7, **dadurch gekennzeichnet, dass** das Saatband (1) und/oder das Saatbandsystem mit wenigstens einer Bewässerungsvorrichtung (5) gekoppelt ist.

9. Begrünungs- oder Bepflanzungssystem nach Anspruch 8, **dadurch gekennzeichnet, dass** die Bewässerungsvorrichtung (5) durch das Schlauchtextil (2) geführt ist.

10. Begrünungs- oder Bepflanzungssystem nach Anspruch 9, **dadurch gekennzeichnet, dass** die Bewässerungsvorrichtung (5) aus mehreren, mit einander gekoppelten oder koppelbaren Teilstücken ausgebildet ist.

11. Begrünungs- oder Bepflanzungssystem nach wenigstens einem der Ansprüche 9 bis 10, **dadurch gekennzeichnet, dass** eine Ummantelung (51) der Bewässerungsvorrichtung (5) Poren (52) zum Austreten eines Bewässerungsfluids (53) aus den Poren (52) aufweist.

12. Begrünungs- oder Bepflanzungssystem nach Anspruch 8, **dadurch gekennzeichnet, dass** die Bewässerungsvorrichtung (5) wenigstens ein Bewässerungsrohr oder eine Bewässerungsrinne (34) aufweist, welche(s) in einem Rohr- oder Rinnenbodenbereich wenigstens eine Öffnung (35) aufweist, an welcher wenigstens ein Saatband (1) hängend befestigt ist, wobei das Bewässerungsrohr oder die Bewässerungsrinne (34) mit einer Zuführung zum Einbringen eines Bewässerungsfluids (53) in das Bewässerungsrohr oder die Bewässerungsrinne (34) gekoppelt ist.

13. Begrünungs- oder Bepflanzungssystem nach Anspruch 12, **dadurch gekennzeichnet, dass** an der wenigstens einen Öffnung (35) wenigstens ein Haken und/oder Karabiner und/oder wenigstens ein regulierbares Ventil (36) und/oder wenigstens eine regulierbare Düse vorgesehen ist.

14. Begrünungs- oder Bepflanzungssystem nach Anspruch 13, **dadurch gekennzeichnet, dass** das Saatband (1) über den Haken oder durch den Karabiner gelegt und/oder durch das Ventil (36) oder die Düse geführt ist.

15. Begrünungs- oder Bepflanzungssystem nach wenigstens einem der Ansprüche 12 bis 14, **dadurch gekennzeichnet, dass** das Saatband (1) mit wenigstens einem Knoten (12) oder einer Schlaufe, der bzw. die in oder an dem Saatband (1) vorgesehen ist, an dem Bewässerungsrohr oder der Bewässerungsrinne (34) fixiert ist.

## Claims

1. Seed tape (1) comprising seeds (11) embedded in a covering tube at a distance (13) from one another, the covering tube being a tubular sleeve (2) which encloses the seeds (11) in a stretched manner before and/or during the germination of the seeds (11) and is unstretched between the seed positions, the seeds (11) embedded in the tubular sleeve (2) being embedded in at least one substrate (32) and/or being in contact with at least one substrate (32), and the substrate (32) being formed from at least one fiber-like and/or foamed organic or mineral material,
**characterized in that**
the substrate (32) comprises at least one yarn, at least one thread or at least one rope or at least one non-woven mat or at least one non-woven tape, and the seeds (11) being fixed on said at least one yarn, thread or rope, the at least one non-woven mat or the at least one non-woven tape, or **in that** the seeds (11) are loosely held between the covering tube and the at least one yarn, thread or rope, the at least one non-woven mat or the at least one non-woven tape.

2. Seed tape according to claim 1, **characterized in that** the tubular sleeve (2) is knitted and/or braided and/or twisted to form at least one strand and/or processed to form a tube from at least one band.

3. Seed tape according to at least one of the preceding claims, **characterized in that** the substrate (32) and/or the tubular sleeve (2) is substantially or entirely formed from at least one biodegradable material, the biodegradable material comprising hemp and/or flax and/or linen and/or coconut fibers and/or silk and/or at least one protein and/or cellulose.

4. Seed tape system, **characterized in that** at least two seed tapes (1) according to at least one of the preceding claims are processed to form or in a flat textile or are twisted with one another.

5. Seed tape system according to claim 4, **characterized in that** the at least two seed tapes (1) are interwoven or woven into the flat textile.

6. Greening or planting system (3, 3a, 3b) for an object (4) to be greened or planted, **characterized in that** the greening or planting system (3, 3a, 3b) comprises at least one seed tape (1) according to any of claims 1 to 3 and/or a seed tape system according to either claim 4 or claim 5, which is provided on and/or in the object (4).

7. Greening or planting system according to claim 6, **characterized in that** the seed tape (1) and/or the seed tape system is provided with guide and/or fastening elements (44) on the object (4) that are spaced apart from one another.

8. Greening or planting system according to at least one of claims 6 or 7, **characterized in that** the seed tape (1) and/or the seed tape system is coupled to at least one irrigation device (5).

9. Greening or planting system according to claim 8, **characterized in that** the irrigation device (5) is conducted through the tubular sleeve (2).

10. Greening or planting system according to claim 9, **characterized in that** the irrigation device (5) is formed from a plurality of parts that are or can be coupled to one another.

11. Greening or planting system according to at least one of claims 9 to 10, **characterized in that** a coating (51) of the irrigation device (5) comprises pores (52) for an irrigation fluid (53) to exit from the pores (52).

12. Greening or planting system according to claim 8, **characterized in that** the irrigation device (5) comprises at least one irrigation pipe or one irrigation channel (34) which comprises at least one opening (35) in a pipe or channel bottom region, at which opening at least one seed tape (1) is suspended, the irrigation pipe or the irrigation channel (34) being coupled to a feed for introducing an irrigation fluid (53) into the irrigation pipe or the irrigation channel (34).

13. Greening or planting system according to claim 12, **characterized in that** at least one hook and/or carabiner and/or at least one adjustable valve (36) and/or at least one adjustable nozzle is provided at the at least one opening (35).

14. Greening or planting system according to claim 13, **characterized in that** the seed tape (1) is placed over the hook or through the carabiner and/or is guided through the valve (36) or the nozzle.

15. Greening or planting system according to at least one of claims 12 to 14, **characterized in that** the seed tape (1) is fixed on the irrigation pipe or the irrigation channel (34) with at least one knot (12) or a loop that is provided in or on the seed tape (1).

## Revendications

1. Ruban de semis (1) qui présente des semences (11) incorporées dans une gaine enveloppante selon un écartement (13) les unes par rapport aux autres, la gaine enveloppante étant une gaine textile (2) qui entoure les semences (11) avant et/ou pendant la germination des semences (11) de façon dilatée et n'est pas étirée entre les positions de semences, les semences (11) incorporées dans la gaine textile (2) étant incorporées dans au moins un substrat (32) et/ou étant en contact avec au moins un substrat (32), et le substrat (32) étant réalisé à partir d'au moins un matériau organique ou minéral fibreux et/ou expansé,
**caractérisé en ce**
**que** le substrat (32) présente au moins un fil, au moins une ficelle ou au moins une corde ou au moins un tapis de non-tissé ou au moins un ruban de non-tissé, et les semences (11) étant fixées sur l'au moins un fil, une ficelle ou une corde, sur l'au moins un tapis de non-tissé ou l'au moins un ruban de non-tissé, ou les semences (11) étant maintenues sans fixation entre la gaine enveloppante et l'au moins un fil, une ficelle ou une corde, l'au moins un tapis de non-tissé ou l'au moins un ruban de non-tissé.

2. Ruban de semis selon la revendication 1, **caractérisé en ce que** la gaine textile (2) est tricotée et/ou tressée et/ou torsadée en au moins un cordon et/ou transformée en une gaine à partir d'au moins un ruban.

3. Ruban de semis selon au moins l'une des revendications précédentes, **caractérisé en ce que** le substrat (32) et/ou la gaine textile (2) sont réalisés majoritairement ou entièrement à partir d'au moins un matériau biodégradable, le matériau biodégradable présentant du chanvre et/ou du lin et/ou de la toile et/ou des fibres de coco et/ou de la soie et/ou au moins une protéine et/ou de la cellulose.

4. Système de ruban de semis, **caractérisé en ce qu'**au moins deux rubans de semis (1) selon au moins l'une des revendications précédentes sont transformés en ou dans un textile plat ou sont torsadées l'un avec l'autre.

5. Système de ruban de semis selon la revendication 4, **caractérisé en ce que** les au moins deux ruban de semis (1) sont tissés ou sont tissés dans le textile plat.

6. Système de végétalisation ou de plantation (3, 3a, 3b) destiné à un objet (4) à verdir ou à planter, **caractérisé en ce que** le système de végétalisation ou de plantation (3, 3a, 3b) présente au moins un ruban de semis (1) selon l'une des revendications 1 à 3 et/ou un système de ruban de semis selon l'une des revendications 4 ou 5, lequel est prévu sur et/ou au niveau de et/ou dans l'objet (4).

7. Système de végétalisation ou de plantation selon la revendication 6, **caractérisé en ce que** le ruban de semis (1) et/ou le système de ruban de semis sont prévus sur l'objet (4) avec des éléments de guidage et/ou de fixation (44) écartés les uns par rapport aux autres.

8. Système de végétalisation ou de plantation selon au moins l'une des revendications 6 ou 7, **caractérisé en ce que** le ruban de semis (1) et/ou le système de ruban de semis est accouplé à au moins un dispositif d'irrigation (5).

9. Système de végétalisation ou de plantation selon la revendication 8, **caractérisé en ce que** le dispositif d'irrigation (5) est guidé à travers la gaine textile (2).

10. Système de végétalisation ou de plantation selon la revendication 9, **caractérisé en ce que** le dispositif d'irrigation (5) est réalisé à partir de plusieurs pièces partielles qui sont accouplées ou peuvent être accouplées les unes aux autres.

11. Système de végétalisation ou de plantation selon au moins l'une des revendications 9 à 10, **caractérisé en ce qu'**une enveloppe (51) du dispositif d'irrigation (5) présente des pores (52) permettant la sortie d'un fluide d'irrigation (53) des pores (52).

12. Système de végétalisation ou de plantation selon la revendication 8, **caractérisé en ce que** le dispositif d'irrigation (5) présente au moins un tuyau d'irrigation ou un canal d'irrigation (34), lequel présente au moins une ouverture (35) dans une zone de fond de tuyau ou de canal, au moins un ruban de semis (1) étant suspendu au niveau de ladite ouverture, le tuyau d'irrigation ou le canal d'irrigation (34) étant accouplé à une alimentation permettant d'introduire un fluide d'irrigation (53) dans le tuyau d'irrigation ou le canal d'irrigation (34).

13. Système de végétalisation ou de plantation selon la revendication 12, **caractérisé en ce qu'**au moins un crochet et/ou mousqueton et/ou au moins une soupape réglable (36) et/ou au moins une buse réglable sont prévus sur l'au moins une ouverture (35).

14. Système de végétalisation ou de plantation selon la revendication 13, **caractérisé en ce que** le ruban de semis (1) est guidé par-dessus le crochet ou à travers le mousqueton et/ou à travers la soupape (36) ou la buse.

15. Système de végétalisation ou de plantation selon au moins l'une des revendications 12 à 14, **caractérisé en ce que** le ruban de semis (1) est fixé sur le tuyau d'irrigation ou le canal d'irrigation (34) au moyen d'au moins un nœud (12) ou d'une boucle, lequel ou laquelle est prévu(e) dans ou sur le ruban de semis (1).
